**Europäisches Patentamt**

**European Patent Office**

**Office européen des brevets**

(11) Veröffentlichungsnummer: **0 072 430**

**B1**

(12) **EUROPÄISCHE PATENTSCHRIFT**

(45) Veröffentlichungstag der Patentschrift:
03.02.88

(21) Anmeldenummer: **82106189.2**

(22) Anmeldetag: **10.07.82**

(51) Int. Cl.⁴: **G 01 K 7/06**

(54) Thermoelement zur Temperaturmessung und Verfahren zur Herstellung desselben.

(30) Priorität: **14.08.81 DE 3132237**

(43) Veröffentlichungstag der Anmeldung:
**23.02.83 Patentblatt 83/8**

(45) Bekanntmachung des Hinweises auf die Patenterteilung:
**03.02.88 Patentblatt 88/5**

(84) Benannte Vertragsstaaten:
**FR GB IT NL SE**

(56) Entgegenhaltungen:
**EP-A-0 004 031**
**DE-A-2 148 270**
**US-A-2 094 102**
**US-A-2 137 280**

**NUCLEAR POWER, Band 6, Nr. 62, Juni 1961, Seite 70, London, GB; "Thermocouples for high temperatures"**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Hüther, Werner, Dr.- Ing., Nikolaus-Lenau- Strasse 8, D-8047 Karlsfeld (DE)**

EP 0 072 430 B1

## Beschreibung

Die Erfindung bezieht sich auf ein Verfahren zur Herstellung eines Thermoelements mit einem Rohr aus Siliziumkarbid und einer koaxial darin angeordneten Stange aus Kohlenstoff, die mit ihrem einen Ende in einem Sackloch eines geschlossenen Rohrendes sitzt und die heiße Berührstelle des Thermoelements bildet.

Thermoelemente der vorbezeichneten Bauart sind aus der Druckschrift "Nuclear Power", Band 6, Nr. 62, Juni 1961, Seite 70, London, GB, und aus der US-PS-2 137 280 bekannt. Der zuerst genannten Druckschrift ist ein Hinweis auf die Art der Verbindungstechnik zwischen Kohlenstoffstange und Keramikrohr nicht zu entnehmen. In der zuletzt genannten Druckschrift (US-PS) wird gelehrt, die Kohlenstoffstange mittels einer Schraubverbindung in dem Rohr aus Siliziumkarbid zu befestigen. Die Schraubverbindung birgt die Gefahr, daß aufgrund der stark wechselnden Temperaturen an der heißen Berührstelle des Thermoelements eine Lockerung eintritt und damit eine Verfälschung der auftretenden Thermospannung. Die Schraubverbindung birgt außerdem die Gefahr in sich, daß aggressive Medien, in denen das Thermoelement betrieben wird, die Werkstoffeigenschaften und damit die Thermospannung an der Kontaktstelle verändern.

Aufgabe der vorliegenden Erfindung ist es, ein Verfahren zur Herstellung eines Thermoelements der eingangs bezeichneten Bauart zu schaffen, mit dem eine besonders dauerhafte und höchsten Temperaturen sowie korrosiven Gasen standhaltende Verbindung zwischen dem Rohr und der Kohlenstoffstange erzielbar ist und bei dem die Wandstärke des Rohres im Hinblick auf den Einsatzzweck des Thermoelements frei wählbar ist.

Erfindungsgemäß wird die gestellte Aufgabe dadurch gelöst, daß das Rohr einschließlich seines geschlossenen Endes aus sinterfähigem Siliziumkarbid als Grünling hergestellt wird, die Stange in das Sackloch des geschlossenen Rohrendes eingeführt wird und das Rohr zusammen mit der Stange gesintert wird.

Ein wesentlicher Vorteil des erfindungsgemäßen Verfahrens liegt darin, daß ein intensiver Kontakt zwischen dem äußeren Keramikrohr und der inneren Kohlenstoffstange erzielt wird, ohne daß fremde Elemente oder Materialien an der Kontaktfläche zwischen diesen beiden Elementen notwendig wären. Infolge des direkten Kontaktes zwischen der Kohlenstoffstange und dem Keramikrohr entfällt demzufolge die Gefahr von unerwünschten Reaktionen chemischer oder physikalischer Art, wodurch über lange Zeit hinweg eine einwandfrei bleibende Berührstelle geschaffen ist und somit die Garantie dafür, daß eine hohe Konstanz der auftretenden Thermospannung gewährleistet ist. Durch den Sinterschrumpf umschließt das geschlossene Rohrende die Stange darüber hinaus sehr fest über die Umfangswand des Sacklochs, wodurch die gebildete heiße Berührstelle über lange Zeit hinweg gegen Eindringen aggressiver und/oder korrosiver Gase geschützt ist.

Bei einer bevorzugten Ausführungsform des Verfahrens werden dem Siliziumkarbid 0,01 % bis 5 % Bor oder Aluminium und 0 01 % bis 5 % freier Kohlenstoff zugesetzt und es werden die Sinterparameter so eingestellt, daß das Rohr gasdicht sintert.

Bei einer weiteren bevorzugten Ausführungsform des Verfahrens wird gleichzeitig mit dem Einsintern der Kohlenstoffstange in das Rohr auf das andere Ende der Stange ein Anschlußring aus Siliziumkarbid aufgesintert. Der Anschlußring bildet die kalte Berührstelle des Thermoelements. Durch die gleichzeitige Erzeugung der heißen und der kalten Berührstelle mit den gleichen Mitteln und Materialien werden Fehlereinflüsse beim Betrieb des Thermoelements praktisch ausgeschaltet, so daß als Parameter für die Änderung der Thermospannung nur der Temperaturunterschied zwischen heißer und kalter Berührstelle in Frage kommt.

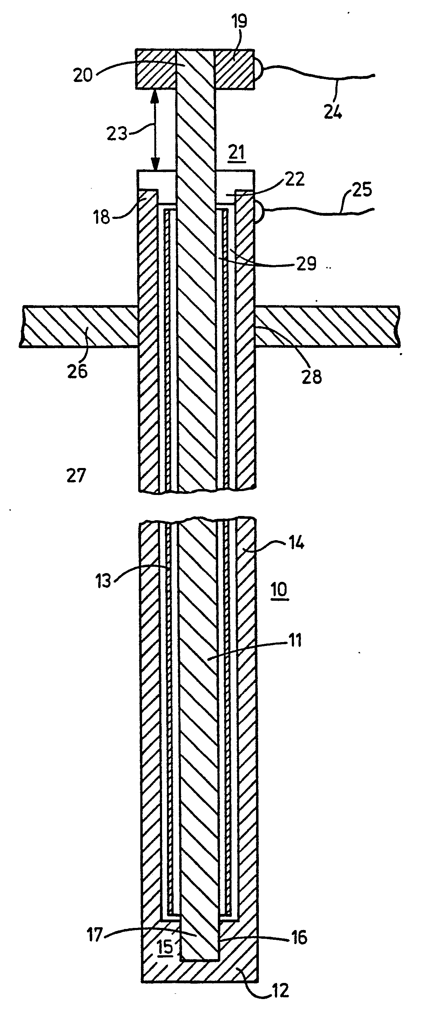

In der Zeichnung ist ein Thermoelement, wie es Gegenstand des erfindungsgemäßen Verfahrens ist, im Längsschnitt schematisch und vergrößert dargestellt.

Das Rohr 10 und die Stange 11 sind zueinander koaxiale Umdrehungskörper. Das Rohr 10 besteht aus Siliziumkarbid und hat einen Außendurchmesser von z. B. 5 mm, und die Stange 11 besteht aus Graphit, ist ein Vollzylinder und hat einen Durchmesser von z. B. 2 mm. Das Rohr 10 ist an seinem Ende 12 geschlossen, indem das Rohr 10 dort einen Boden aufweist, der mit dem zylindrischen Teil 14 des Rohrs 10 einstückig ist. Der Boden weist ein nach innen offenes Sackloch 15 auf. Die heiße Berührstelle 16 ist dadurch gebildet, das das Stangenende 17 fest im Sackloch 15 sitzt. Die Berührstelle 16 befindet sich also im Inneren des Rohrs 10. Dieser feste Sitz ist durch den Sinterschrumpf zustande gekommen. Ferner ragt die Stange 11 aus dem Rohrende 18 heraus und ist ein Ring 19 auf das Stangenende 20 aufgesintert. Der Ring 19 besteht aus Siliziumkarbid. Ferner ist ein Isolier- und Dichtring 21,21 vorgesehen der zweiteilig ist; in der Zeichnung ist der eine Halbring 21 dieses Rings zu sehen. Dieser Isolierund Dichtring 21,21 besteht z. B. aus Aluminiumoxid ($Al_2O_3$) oder organischem Kunststoff und befindet sich mit einem Axialansatz 22 im Rohrende 18 und ist mit diesem verlötet bzw. verklebt. Der Innenraum 29 des Rohrs 10 ist also vollkommen abgeschlossen. Zwischen den beiden Ringen 19 und 21,21 ist ein axialer Abstand 23 vorhanden. Vom Rohrende 18 und vom Ring 19 führen metallische Anschlüsse 24 und 25 zu einem nicht dargestellten Meßinstrument oder dgl. Das Rohr 10 führt gasdicht durch eine Wand 26 eines mit heißen Gasen erfüllten Meßraums 27. Diese Durchführung ist mit 28 bezeichnet. Das Rohr 10 befindet sich, axial gesehen, zum größten Teil innerhalb und zu einem kleinen Teil außerhalb des Meßraums 27. Die Ringe 19 und 21 befinden sich außerhalb des Meßraums 27 in einer lufterfüllten Umgebung. Zwischen dem Rohr 10 und der Stange 11 ist ein elektrisch isolierendes Rohr 13 z. B. aus Titannitrid (TiN) vorgesehen, dessen Dicke kleiner ist als der radiale Abstand zwischen dem Rohr 10 und der Stange 11.

Auch unter dem Siliziumkarbid des Rings für die Ausgleichstelle wird im Rahmen der Erfindung auch ein Werkstoff verstanden, der zu mindestens 90 % aus Siliziumkarbid besteht und bei dem der Rest ein Zusatz ist oder Zusätze sind.

**Patentansprüche**

1. Verfahren zur Herstellung eines Thermoelements mit einem Rohr (10) aus Siliziumkarbid und einer koaxial darin angeordneten Stange (11) aus Kohlenstoff, die mit ihrem einen Ende (17) in einem Sackloch (15) eines geschlossenen Rohrendes sitzt und die heiße Berührstelle des Thermoelements bildet, dadurch gekennzeichnet, daß das Rohr (10) einschließlich seines geschlossenen Endes (12) aus sinterfähigem Siliziumkarbid als Grünling hergestellt wird, die Stange (11) in das Sackloch (15) des geschlossenen Rohrendes (12) eingeführt wird und das Rohr (10) zusammen mit der Stange (11) gesintert wird.

2. Verfahren nach Anspruch 1, dadurch gekennzeichnet, daß dem Siliziumkarbid 0,01 % bis 5 % Bor oder Aluminium und 0,01 % bis 5 % freier Kohlenstoff zugesetzt werden und die Sinterparameter so eingestellt werden, daß das Rohr (10) gasdicht sintert.

3. Verfahren nach Anspruch 1 oder Anspruch 2, dadurch gekennzeichnet, daß gleichzeitig mit dem Einsintern der Kohlenstoffstange (11) in das Rohr (10) auf das andere Ende der Stange (11) ein Anschlußring (19) aus Siliziumkarbid aufgesintert wird.

**Claims**

1. A method of producing a thermoelement with a tube (10) of silicon carbide and, disposed coaxially therein, a rod (11) of carbon which has one end (17) fitted into a blind hole (15) of a closed tube end so that it constitutes the hot contact point of the thermoelement, characterised in that the tube (10) including its closed end (12) is produced from sinterable silicon carbide as a green compact, the rod (11) being introduced into the blind hole (15) in the closed tube end (12) and the tube (10) being sintered together with the rod (11).

2. A method according to Claim 1, characterised in that 0.01 % to 5 % boron or aluminium and 0.01 % to 5 % free carbon are added to the silicon carbide, the sintering parameters being so adjusted that the tube (10) is sintered gas-tight.

3. A method according to Claim 1 or Claim 2, characterised in that at the same time as the carbon rod (11) is being sintered into the tube (10), a connecting ring (19) of silicon carbide is sintered onto the other end of the rod (11).

**Revendications**

1. Procédé pour la réalisation d'un thermoélément avec un tube (10) en carbure de silicium et une tige (11) en carbone disposée co-axialement dans ce tube, et dont une des extrémités (17) est placée dans un trou borgne (15) d'une extrémité fermée de ce tube et constitue le point chaud de contact du thermoélément, procédé caractérisé en ce que le tube (10), y compris son extrémité fermée (12) est réalisé en tant qu'ébauche verte en carbure de silicium susceptible d'être frittée, en ce que la tige (11) est introduite dans le trou borgne (15) de l'extrémité fermée (12) du tube et que le tube (10) est fritté en même temps que la tige (11).

2. Procédé selon la revendication 1 caractérisé en ce qu'au carbure de silicium sont ajoutés 0,01 % à 5 % de bore ou d'aluminium et 0,01 % à 5 % de carbone libre, et les paramètres de frittage sont réglés de façon que le tube (10) soit fritté de façon étanche aux gaz.

3. Procédé selon la revendication 1 ou la revendication 2, caractérisé en ce que, en même temps que le frittage de la tige en carbone (11) dans le tube (10), un anneau de raccordenent (19) en carbure de siliciun est fritté à l'autre extrémité de la tige (11).

0 072 430